# EUROPÄISCHE PATENTSCHRIFT

(11) **EP 2 036 776 B1**
(45) Veröffentlichungstag und Bekanntmachung des Hinweises auf die Patenterteilung: **19.10.2016**
(21) Anmeldenummer: 08104815.9
(22) Anmeldetag: 22.07.2008
(51) Int. Cl.: B60R 16/02, G01P 15/08, B60W 40/10, G01S 13/93, G01S 7/40

(54) **Verfahren zur Bestimmung der Ausrichtung eines Objekts**
Method for determining the alignment of an object
Procédé destiné à la détermination l'alignement d'un objet

(30) Priorität: 14.09.2007 DE 102007043909
(43) Veröffentlichungstag der Anmeldung: 18.03.2009
(73) Patentinhaber: ROBERT BOSCH GMBH, 70442 Stuttgart (DE)
(72) Erfinder: Focke, Thomas, 31180 Ahrbergen (DE); Brueggemann, Oliver, 75248 Oelbronn-Duerrn (DE); Weikert, Lars, 70180 Stuttgart (DE); Hansen, Thomas, 31139 Hildesheim (DE); Schmidt, Ewald, 71634 Ludwigsburg (DE)

(56) Entgegenhaltungen:
- WO-A2-2008/103584
- DE-A1- 19 949 969
- US-A1- 2007 132 634

## Beschreibung

Die Erfindung betrifft ein Verfahren zur Bestimmung der Ausrichtung eines in oder an einem Fahrzeug, insbesondere Kraftfahrzeug, angeordneten Objekts.

### Stand der Technik

Aus dem Stand der Technik sind Verfahren zur Bestimmung der Ausrichtung eines in und/oder an einem Fahrzeug angeordneten Objekts bekannt. Dabei werden beispielsweise mittels optischen Hilfsmitteln, wie zum Beispiel Kameras und/oder Laser-Entfernungsmesseinrichtungen die Ausrichtung des Objekts zu dem Fahrzeug eindeutig bestimmt. Insbesondere wird dabei die Position beziehungsweise Ausrichtung des Objekts zu dem Fahrzeug mit Hilfe von mindestens drei Winkeln beschrieben. Befindet sich das Objekt jedoch in einem von außen schlecht zugänglichen Bereich des Fahrzeugs, so können derartige Verfahren nicht zur Bestimmung der Ausrichtung des Objekts verwendet werden. Die Ermittlung der Ausrichtung des Objekts mittels herkömmlichen mechanischen Mitteln, wie zum Beispiel mittels eines Messschiebers, ist aufgrund der baulichen Gegebenheiten auch nicht immer möglich.

Die US2007/0132634 offenbart eine Methode zur Kompensation von Drehbewegungen einer Radarplattform und eine Messung von Drehbewegungen der Radarplattform. Die DE19949969 beschreibt eine Befestigungsvorrichtung für einen Abstandssensor eines Kraftfahrzeugs mit einem um wenigstens zwei Verstellachsen schwenkbaren Haltemittel zur Aufnahme eines Abstandssensors.

### Offenbarung der Erfindung

Die Erfindung sieht zur Bestimmung der Ausrichtung eines in oder an einem Fahrzeug angeordneten Objekts folgende Schritte vor: Zunächst wird das Fahrzeug im Wesentlichen in einer Ebene senkrecht zu der Wirkungsrichtung der Schwerkraft bewegt; dabei wird ein erster Winkel zwischen der Längsachse des Objekts und der Ebene mittels eines ersten, im Wesentlichen von der Schwerkraft beaufschlagten und an dem Objekt angeordneten Beschleunigungssensors ermittelt, weiterhin wird ein zweiter Winkel zwischen der Querachse des Objekts und der Ebene mittels eines zweiten, im Wesentlichen von der Schwerkraft beaufschlagten und an dem Objekt angeordneten Beschleunigungssensors ermittelt und schließlich wird ein in der Ebene liegender dritter Winkel zwischen der Längsachse des Objekts und einer Längsachse des Fahrzeugs mittels eines dritten, im Wesentlichen von einer durch die Bewegung des Fahrzeugs erzeugten Trägheitskraft beaufschlagten und an dem Objekt angeordneten Beschleunigungssensors ermittelt. Es ist also vorgesehen, dass die Ermittlung des ersten Winkels und des zweiten Winkels mittels jeweils eines Beschleunigungssensors, der von der Schwerkraft beaufschlagt wird, erfolgt. Unter der Beaufschlagung des Beschleunigungssensors mit einer Kraft ist hierbei zu verstehen, dass der Beschleunigungssensor von der Kraft betätigt wird, beziehungsweise dass die (Schwer-) Kraft als zu erfassende Beschleunigung verwendet wird. Die Beschleunigungssensoren werden hierzu vorteilhafterweise derart an dem Objekt angeordnet, dass sie wenn der erste Winkel beziehungsweise der zweite Winkel gleich Null ist, also die Längsachse beziehungsweise die Querachse des Objekts in der Ebene liegen, der entsprechende Beschleunigungssensor nicht auf die Schwerkraft reagiert. Dazu wird der Beschleunigungssensor zweckmäßigerweise in seiner Wirkungsrichtung parallel zur Längsachse beziehungsweise zur Querachse an dem Objekt angeordnet. Ist das Objekt beispielsweise verkippt um seine Längsachse ausgerichtet, so wird der zweite Beschleunigungssensor, der den zweiten Winkel zwischen der Querachse des Objekts und der Ebene ermittelt, mit der Schwerkraft beaufschlagt, wobei sich die erfassten Messwerte des zweiten Beschleunigungssensors in Abhängigkeit von der Winkellage verändern, sodass im Rückschluss anhand der Messwerte auf den Winkel zwischen der Querachse des Objekts zu der Ebene geschlossen werden kann. Durch die oben beschriebenen, im Wesentlichen durch die Schwerkraft beaufschlagten Beschleunigungssensoren ist es auf einfache Art und Weise möglich, die Ausrichtung des Objekts in zumindest zwei Dimensionen zu ermitteln. Zum Ermitteln des in der Ebene liegenden dritten Winkels zwischen der Längsachse des Objekts und einer Längsachse des Fahrzeugs wird der dritte Beschleunigungssensor wie oben beschrieben derart angeordnet, dass er im Wesentlichen von einer durch die Bewegung des Fahrzeugs erzeugten Trägheitskraft beaufschlagt wird. Der dritte Beschleunigungssensor wird also mit anderen Worten nicht oder nur vernachlässigbar von der Schwerkraft beaufschlagt. Stattdessen wird hier eine durch die Bewegung des Fahrzeugs erzeugte und auf den Beschleunigungssensor wirkende Trägheitskraft zum Ermitteln des dritten Winkels verwendet. Je nach Größe der auftretenden Trägheitskraft beziehungsweise der dadurch erfassten Messwerte des dritten Beschleunigungssensors kann auf den in der Ebene liegenden dritten Winkel zwischen der Längsachse des Objekts und der Längsachse des Fahrzeugs geschlossen werden.

Vorteilhafterweise wird zum Ermitteln des dritten Winkels das Fahrzeug in Richtung seiner Längsachse mit einer bekannten Beschleunigung angetrieben. Der dritte Beschleunigungssensor wird in seiner Wirkungsrichtung senkrecht zur Längsachse des Objekts angeordnet, sodass wenn das Objekt zwischen seiner Längsachse und der Längsachse des Fahrzeugs einen Winkel größer Null einschließt, auf den Beschleunigungssensor eine Querkraft (Trägheitskraft) wirkt. Die Beschleunigung wirkt sich auf das Objekt und den daran angeordneten dritten Beschleunigungssensor aus, der aufgrund seiner Trägheit (Trägheitskraft) reagiert und eine Beschleunigung erfasst. Der dritte Winkel wird in Abhängigkeit von der Höhe der erfassten Beschleunigung beziehungsweise Trägheitskraft bestimmt. Hierzu muss lediglich das Verhältnis der erfassten Beschleunigung zu dem dritten Winkel bekannt sein. Zum Bestimmen des dritten Winkels ist es auch denkbar die bekannte Beschleunigung mit der von dem dritten Beschleunigungssensor erfassten Beschleunigung zu vergleichen. Stimmen die Beschleunigungen überein, so ist davon auszugehen, dass das Objekt mit seiner Querachse parallel zur Längsachse des Fahrzeugs ausgerichtet und der dritte Winkel gleich 90° ist. Ist die erfasste Beschleunigung ungleich Null und ungleich der bekannten Beschleunigung, so kann auf den dritten Winkel in Abhängigkeit von der Größe der Differenz der beiden Beschleunigungen geschlossen werden. Weiterhin ist vorgesehen, dass die bekannte Beschleunigung vorgegeben und/oder mittels eines am Fahrzeug angeordneten vierten Beschleunigungssensors ermittelt wird. Die von dem dritten Beschleunigungssensor erfasste Beschleunigung wird also mit einer vorgegebenen (Soll-) Beschleunigung des Fahrzeugs und/oder der tatsächlichen Beschleunigung des Fahrzeugs verglichen, wobei die tatsächliche Beschleunigung (Ist-Beschleunigung) des Fahrzeugs mittel des vierten Beschleunigungssensors auf bekannte Art und Weise ermittelt wird.

Nach einer Weiterbildung der Erfindung wird zum Ermitteln des dritten Winkels eine Beschleunigungsrichtung des Fahrzeugs ermittelt. Für den Fall, dass sich das Fahrzeug nicht entlang seiner Längsachse, also geradeaus, bewegt, sondern zum Beispiel entlang einer Kurve, so müssen insbesondere die Messwerte des dritten Beschleunigungssensors relativiert beziehungsweise kompensiert werden. Hierzu dient die ermittelte Beschleunigungsrichtung des Fahrzeugs.

Zweckmäßigerweise wird die Beschleunigungsrichtung des Fahrzeugs aus einem Lenkwinkel und/oder einer Querbeschleunigung des Fahrzeugs ermittelt. Hierbei können Signale einer Lenkeinrichtung des Fahrzeugs zur Erfassung des Lenkwinkels und/oder zur Bestimmung der Querbeschleunigung verwendet werden. Zur Erfassung der Querbeschleunigung ist es auch denkbar einen weiteren Beschleunigungssensor an dem Fahrzeug vorzusehen.

Nach einer vorteilhaften Weiterbildung der Erfindung werden zum Ermitteln des dritten Winkels Messwerte des dritten Beschleunigungssensors über einen vorgebbaren Zeitraum und/oder über eine vorgebbare Strecke hinweg erfasst. Hierdurch kann ein Bestimmen des dritten Winkels bei einer Bewegung des Fahrzeugs in der Ebene erfolgen, bei der das Fahrzeug sowohl geradeaus als auch Kurven fährt. Hierbei wird der dritte Beschleunigungssensor über den vorgebbaren Zeitraum und/oder über die vorgebbare Strecke hinweg unterschiedlich mit der durch die Bewegung des Fahrzeugs erzeugten Trägheitskraft beaufschlagt, sodass er unterschiedliche Messwerte über den Zeitraum und/oder die Strecke erfasst. Voraussetzung für dieses Verfahren ist, dass sich das Fahrzeug nicht überwiegend in einer Kurvenfahrt zur einen oder zur anderen Seite befindet, sondern sich im Wesentlichen geradeaus bewegt, wobei sich die Links- und Rechtskurven über den Zeitraum und/oder die Strecke hinweg im Wesentlichen ausgleichen. Dies kann zum Beispiel durch Erfassen von Lenkeinschlägen überprüft werden. Unter der vorgebbaren Strecke ist hierbei lediglich die Entfernung, die das Fahrzeug bei der Bewegung zurücklegt, zu verstehen. Natürlich ist es auch denkbar eine Streckenführung, der das Fahrzeug in seiner Bewegung folgt, vorzugeben.

Zweckmäßigerweise wird von den von dem dritten Beschleunigungssensor erfassten Messwerten ein Mittelwert, insbesondere ein statistischer Mittelwert bestimmt. Als Mittelwert ergibt sich dabei die Verdrehung des Sensors beziehungsweise der Längsachse des Objekts zur Längsachse des Fahrzeugs um den dritten Winkel. Wobei zum Bestimmen des dritten Winkels zwischen der Längsachse des Objekts und der Längsachse des Fahrzeugs der Mittelwert zusätzlich mit der bekannten Beschleunigung des Fahrzeugs, wie oben beschrieben, verglichen werden kann.

Vorteilhafterweise wird als zumindest einer der Beschleunigungssensoren ein kapazitiver Beschleunigungssensor verwendet. So wird zum Beispiel ein mikroelektro-mechanischer Sensor verwendet, der ein Feder-Masse-System aufweist, dessen Auslenkung bei einer Beschleunigung anhand einer Änderung der elektrischen Kapazität zwischen einem gefedert aufgehängten Teil und einer festen Bezugselektrode gemessen werden kann. Vorteilhafterweise werden hierzu als zueinander verschiebbare Teile sogenannte Kondensator-Kämme verwendet, die ineinander greifen.

Schließlich ist vorgesehen, dass als Objekt eine Entfernungserfassungseinrichtung, insbesondere ein Radar-Sensor, verwendet wird. Derartige Sensoren werden beispielsweise zur Abstandsmessung verwendet, zum Beispiel um den Abstand des Fahrzeugs zu einem vorausfahrenden Fahrzeug zu bestimmen. Die Ausrichtung eines derartigen Radar-Sensors im Fahrzeug ist für die Anwendung kritisch und nicht ohne Weiteres korrekt erfassbar/einstellbar. Mittels des vorteilhaften, hier beschriebenen Verfahrens ist es möglich, die Ausrichtung eindeutig zu bestimmen und das Objekt beziehungsweise die Entfernungserfassungseinrichtung auf einfache Art und Weise entsprechend auszurichten.

Ferner betrifft die Erfindung ein Verfahren zum Ausrichten eines in oder an einem Fahrzeug angeordneten Objekts, bei dem vorgesehen ist, dass zunächst die Ausrichtung des Objekts wie oben beschrieben bestimmt wird. Vorteilhafterweise wird das Objekt mittels mindestens eines Stellglieds/Aktors in Abhängigkeit der ermittelten Winkel beziehungsweise der bestimmten Ausrichtung des Objekts ausgerichtet. Hierbei ist es ebenfalls denkbar, die Ausrichtung des Objekts im Betrieb des Fahrzeugs stetig zu ermitteln und das Objekt entsprechend auszurichten. Hierdurch ist es möglich, beispielsweise den Radarsensor in einer Kurvenfahrt des Fahrzeugs entsprechend des Lenkwinkels beziehungsweise des Kurvenradius zu schwenken, um so auch den Abstand zu in der Kurve vorausfahrenden Fahrzeugen zu erfassen.

Weiterhin betrifft die Erfindung eine Vorrichtung zur Bestimmung der Ausrichtung eines in oder an einem Fahrzeug angeordneten Objekts, insbesondere zur Durchführung des oben beschriebenen Verfahrens, mit einem ersten im Wesentlichen von der Schwerkraft beaufschlagten und an dem Objekt angeordneten Beschleunigungssensor zur Ermittlung eines ersten Winkels zwischen der Längsachse des Objekts und einer senkrecht zur der Wirkungsrichtung der Schwerkraft liegenden Ebene, in der sich das Fahrzeug bewegt, mit einem zweiten im Wesentlichen von der Schwerkraft beaufschlagten und an dem Objekt angeordneten Beschleunigungssensor zur Ermittlung eines zweiten Winkels zwischen der Querachse des Objekts und der Ebene sowie mit einem dritten im Wesentlichen von einer durch die Bewegung des Fahrzeugs erzeugten Trägheitskraft beaufschlagten und an dem Objekt angeordneten Beschleunigungssensor zur Ermittlung eines in der Ebene liegenden dritten Winkels zwischen der Längsachse des Objekts und einer Längsachse des Fahrzeugs.

### Kurze Beschreibung der Zeichnungen

Im Folgenden soll die Erfindung anhand einiger Figuren näher erläutert werden. Dazu zeigen
Figur 1 ein Ausführungsbeispiel eines vorteilhaften Verfahrens zur Bestimmung der Ausrichtung eines Objekts,
Figur 2 ein Fahrzeug mit einem ersten Beschleunigungssensor zur Erfassung eines ersten Winkels,
Figur 3 das Fahrzeug mit einem zweiten Beschleunigungssensor zur Erfassung eines zweiten Winkels,
Figur 4 das Fahrzeug mit einem dritten Beschleunigungssensor zur Erfassung eines dritten Winkels und
Figur 5 ein Ausführungsbeispiel für einen Beschleunigungssensor.

### Ausführungsform(en) der Erfindung

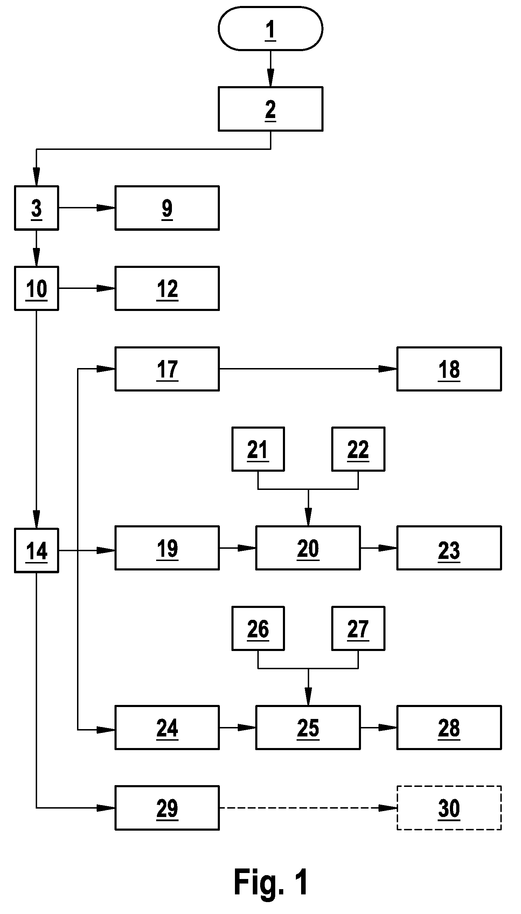

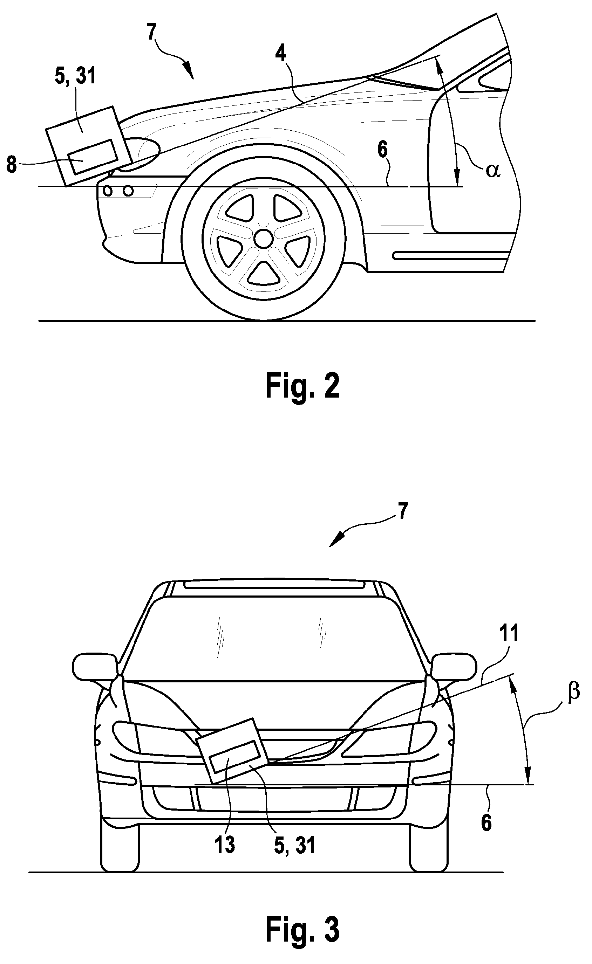

Die Figur 1 zeigt ein Ausführungsbeispiel für ein vorteilhaftes Verfahren zur Bestimmung der Ausrichtung eines in oder an einem Kraftfahrzeug angeordneten Objekts. Nach dem Start 1 wird in einem Schritt 2 sichergestellt, dass sich das Kraftfahrzeug in einer Ebene bewegt, die im Wesentlichen senkrecht zur Wirkungsrichtung der Schwerkraft ausgerichtet ist. In einem darauf folgenden Schritt 3 wird ein erster Winkel α, wie in der Figur 2 dargestellt, zwischen einer Längsachse 4 des Objekts 5 und der Ebene 6, in der sich das Kraftfahrzeug 7 bewegt, ermittelt. Der erste Winkel α stellt somit den Neigungswinkel des Objekts 5 zu dem Kraftfahrzeug 7 dar. Bewegt sich das Kraftfahrzeug 7 insbesondere mit einer konstanten Geschwindigkeit in der Ebene 6 oder steht es in der Ebene 6, so wird ein an dem Objekt 5 angeordneter Beschleunigungssensor 8 im Wesentlichen von der Schwerkraft beaufschlagt. Der erste Beschleunigungssensor 8 wird zweckmäßigerweise derart an dem Kraftfahrzeug 7 angeordnet, dass seine Wirkungsrichtung parallel zur Längsachse des Objekts liegt. In einem Schritt 9 des Verfahrens der Figur 1 werden die vom Beschleunigungssensor 8 erfassten Messwerte derart verarbeitet, dass aus der auf den Beschleunigungssensor als Beschleunigung wirkenden Schwerkraft der Winkel α bestimmt wird. Ist der Winkel α gleich Null (α = 0°), so beeinflusst die Schwerkraft den Beschleunigungssensor 8 nicht, sodass dieser keine Beschleunigung erfassen kann. Ist das Objekt 5 geneigt angeordnet beziehungsweise ausgerichtet, sodass der Winkel α größer Null ist, so wird der Beschleunigungssensor 8 von der Schwerkraft beeinflusst und es kann aus der Veränderung der Messwerte auf den Winkel α geschlossen werden.

Anschließend wird in einem Schritt 10 des in der Figur 1 dargestellten Verfahrens ein zweiter Winkel β (Kippwinkel) erfasst, der wie in der Figur 3 dargestellt, zwischen einer Querachse 11 des Objekts 5 und der Ebene 6 liegt. Hierzu werden in einem Schritt 12 die Messwerte eines an dem Objekt 5 angeordneten zweiten Beschleunigungssensors 13, der ebenfalls im Wesentlichen von der Schwerkraft beaufschlagt wird, verarbeitet und ausgewertet. Wie der Beschleunigungssensor 8 zur Ermittlung des Winkels α wird auch der Beschleunigungssensor 13 zur Ermittlung des Winkels β bei einem Winkel von β = 0° nicht von der Schwerkraft beaufschlagt, wobei eine Abweichung beziehungsweise ein Winkel β größer Null durch Auswerten der Messwerte des Beschleunigungssensors 13 leicht ermittelt werden kann.

In einem weiteren Schritt 14 des vorteilhaften Verfahrens aus der Figur 1 wird ein in der Ebene 6 liegender dritter Winkel δ (Verdrehwinkel) zwischen der Längsachse 4 des Objekts 5 und einer Längsachse 15 des Kraftfahrzeugs 7 mittels eines dritten an dem Objekt angeordneten Beschleunigungssensors 16 ermittelt. Drei mögliche Vorgehensweisen zur Bestimmung des Winkels δ sollen im Folgenden anhand der Figur 1 näher beschrieben werden.

Eine erste Möglichkeit besteht darin, eine Beschleunigung des Kraftfahrzeugs 7, die sich als Trägheitskraft auf den Beschleunigungssensor 16 auswirkt, als auslenkende Größe heranzuziehen. Dazu wird in einem ersten Unterschritt 17 das Kraftfahrzeug entlang seiner Längsachse 15, also geradeaus, beschleunigt. Ist die Längsachse 4 des Objekts 5 nicht parallel zur der Längsachse 15 des Kraftfahrzeugs 7 ausgerichtet und liegt somit die Wirkungsrichtung des Beschleunigungssensors 16 nicht senkrecht zu der Längsachse 15 des Kraftfahrzeugs 7, so bewirkt die Beschleunigung des Kraftfahrzeugs je nach Verdrehung des Objekts 5 eine Trägheitskraft die den Beschleunigungssensor 16 auslenkt beziehungsweise in Abhängigkeit der Stärke der Verdrehung betätigt.

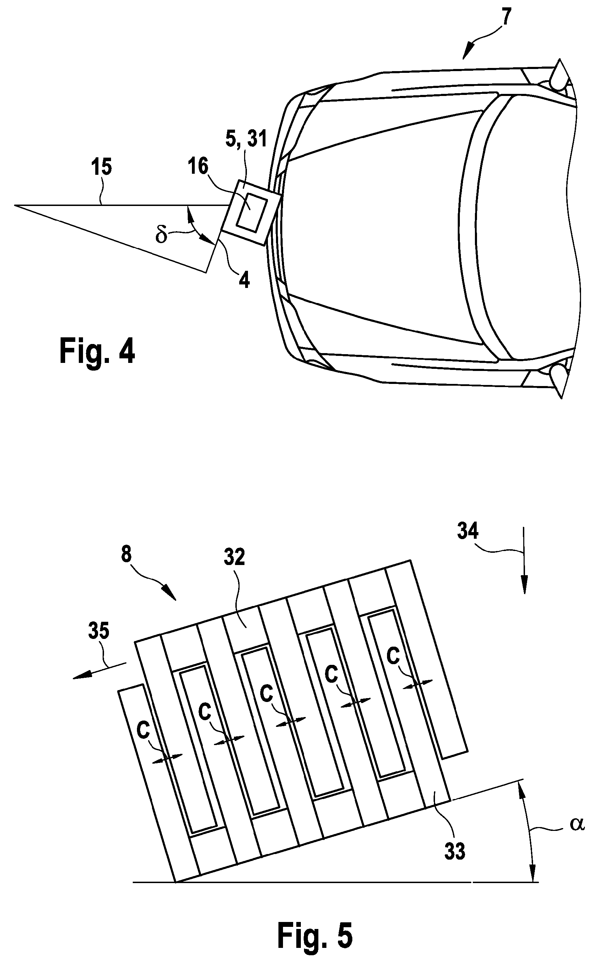

Aus den erfassten Messwerten des Beschleunigungssensors 16 kann bei bekannter Beschleunigung des Kraftfahrzeugs 7 auf den Winkel δ geschlossen werden. In einem darauf folgenden Unterschritt 18 wird dazu die von dem Beschleunigungssensor 16 erfasste Beschleunigung mit der Beschleunigung des Kraftfahrzeugs 7 verglichen, wobei die Beschleunigung des Kraftfahrzeugs 7 entweder vorgegeben wird oder mittel eines weiteren, hier nicht dargestellten Beschleunigungssensors, der an dem Kraftfahrzeug 7 angeordnet ist, erfasst wird. Durch Vergleich der Beschleunigungen kann der azimuthale Winkel δ eindeutig bestimmt werden. Der Beschleunigungssensor 16 und auch die Beschleunigungssensoren 8 und 13 sind vorteilhafterweise als kapazitive Beschleunigungssensoren ausgebildet, wie in der Figur 5 beispielhaft dargestellt.

Eine zweite Möglichkeit zur Bestimmung des Winkels δ besteht darin, das Kraftfahrzeug nicht geradeaus entlang seiner Längsachse 15 sondern entlang einer Kurve zu beschleunigen. In dem Unterschritt 19 wird dazu zunächst das Kraftfahrzeug 7 in Richtung eines Beschleunigungsvektors beschleunigt der in einem Schritt 20 vorgegeben (21) oder erfasst (22) wird. In einem abschließenden Schritt 23 wird zum Beispiel die Auslenkung des Beschleunigungsvektors von dem ermittelten Winkel δ subtrahiert, um die tatsächliche Ausrichtung des Objekts 5 in Bezug auf den Winkel δ zu bestimmen.

Denkbar ist auch eine kontinuierliche Messung des dritten Winkels δ. Dazu wird das Kraftfahrzeug in einem Unterschritt 24 in der Ebene 6 in eine Vorzugsrichtung bewegt, wobei das Kraftfahrzeug 7 sowohl geradeaus als auch Kurven fährt. Mittels des Beschleunigungssensors 16 werden in einem darauffolgenden Schritt 25 kontinuierlich Messwerte über einen vorgebbaren Zeitraum (26) und/oder über eine vorgebbare Strecke (27) hinweg erfasst und ein statistischer Mittelwert gebildet. Geht man bei der Bewegung des Kraftfahrzeugs 7 im statistischen Mittel von einer Geradeaus-Bewegung aus, ergibt sich der Mittelwert als eine Verdrehung des Beschleunigungssensors 16 um den Winkel δ zur Längsachse 15 des Kraftfahrzeugs 7. In einem Schritt 28 wird der Winkel δ aus dem Mittelwert bestimmt.

Sind die drei Winkel α, β und δ in den Schritten 3, 10 und 14 bestimmt worden, so wird in einem Schritt 29 die Ausrichtung des Objekts 5 in oder an dem Kraftfahrzeug 7 vollständig bestimmt. Mittels der bestimmten Ausrichtung und/oder der ermittelten Winkel α, β und δ kann nun beispielsweise mittels einer geeigneten Aktorik, wie zum Beispiel mittels eines als Elektromotor ausgebildeten Stellglieds, das Objekt 5 in einem darauffolgenden Schritt 30 entsprechend der erfassten Winkel α, β und δ ausgerichtet werden.

Insgesamt kann durch das oben beschriebene Verfahren auf einfache Art und Weise die Ausrichtung des Objekts 5 an dem Kraftfahrzeug 7 bestimmt und gegebenenfalls korrigiert werden. Insbesondere wenn das Objekt 5 als eine Entfernungserfassungseinrichtung 31, beispielsweise als Radar-Sensor, ausgebildet ist, ist eine exakte Ausrichtung an dem Kraftfahrzeug 7 für den Betrieb des Radarsensors kritisch.

Wird die Bestimmung der Ausrichtung des Objekts 5 einmalig oder nur selten ausgeführt, so können die Beschleunigungssensoren 8, 13 und 16 vorteilhafterweise auch von anderen Systemen des Kraftfahrzeugs 7, wie zum Beispiel Sicherheitssystemen wie ESP-Systeme oder Airbag-Systeme, verwendet werden. Je nach Ausbildung der Entfernungserfassungseinrichtung 31, kann diese selbst die Ausrichtung durch entsprechende hardware- oder softwareseitige Justierung kompensieren.

Die Figur 5 zeigt ein stark vereinfachtes Ausführungsbeispiel des Beschleunigungssensors 8 zur Erfassung des ersten Winkels α. Der kapazitive Beschleunigungssensor 8 weist zwei Kondensatorkämmer 32, 33 auf, deren Kammzähne ineinander greifen. Der Kondensatorkamm 33 ist dabei nicht und der Kondensatorkamm 32 verschiebbar gelagert. In der dargestellten Neigungsposition mit dem Winkel α größer Null (α > 0) verschiebt sich der Kondensatorkamm 32 aufgrund der auf ihn wirkenden Schwerkraft, die in dem vorliegenden Ausführungsbeispiel in Richtung des Pfeils 34 wirkt, in Richtung des Pfeils 35. Dadurch verringert sich der Abstand der Kammzähne zueinander und die Kapazität C wird vergrößert. Die Kapazität C kann hierbei direkt als Messwert verwendet werden. Alternativ ist es denkbar, den verschiebbaren Kondensatorkamm 32 mit einem magnetischen Feld zu beaufschlagen, das die Kammzähne des Kondensators 32 stets mit einem vorgegebenen Abstand zu den Kammzähnen des Kondensatorkamms 33 positioniert. Die Größe/Stärke des dafür notwendigen magnetischen Feldes kann hierbei als Messwert zur Beurteilung des Winkels α verwendet werden.

## Patentansprüche

1. Verfahren zur Bestimmung der Ausrichtung einer in oder an einem Kraftfahrzeug (7) angeordneten Entfernungserfassungseinrichtung (5) mit folgenden Schritten:
- Bewegen des Kraftfahrzeugs (7) im Wesentlichen in einer Ebene (6) senkrecht zu der Wirkungsrichtung der Schwerkraft,
- Ermitteln eines ersten Winkels (α) zwischen der Längsachse (4) der Entfernungserfassungseinrichtung (5) und der Ebene (6) mittels eines ersten, von der Schwerkraft beaufschlagten und an der Entfernungserfassungseinrichtung (5) angeordneten Beschleunigungssensors (8), wobei die Wirkungsrichtung des ersten Beschleunigungssensors (8) parallel zur Längsachse (4) der Entfernungserfassungseinrichtung (5) angeordnet ist,
- Ermitteln eines zweiten Winkels (β) zwischen der Querachse (11) der Entfernungserfassungseinrichtung (5) und der Ebene (6) mittels eines zweiten, von der Schwerkraft beaufschlagten und an der Entfernungserfassungseinrichtung (5) angeordneten Beschleunigungssensors (13), wobei die Wirkungsrichtung des zweiten Beschleunigungssensors (13) parallel zur Querachse (11) der Entfernungserfassungseinrichtung (5) angeordnet ist,
- Ermitteln eines in der Ebene (6) liegenden dritten Winkels (δ) zwischen der Längsachse (4) der Entfernungserfassungseinrichtung (5) und einer Längsachse (15) des Kraftfahrzeugs (7) mittels eines dritten, von einer durch die Bewegung des Kraftfahrzeugs (7) erzeugten Trägheitskraft beaufschlagten und an der Entfernungserfassungseinrichtung (5) angeordneten Beschleunigungssensors (16), wobei die Wirkungsrichtung des dritten Beschleunigungssensors (16) senkrecht zur Längsachse (4) der Entfernungserfassungseinrichtung (5) angeordnet ist, sodass wenn die Entfernungserfassungseinrichtung (5) zwischen ihrer Längsachse und der Längsachse des Kraftfahrzeugs (7) einen Winkel größer Null einschließt, auf den Beschleunigungssensor eine Trägheitskraft wirkt.

2. Verfahren nach Anspruch 1, **dadurch gekennzeichnet, dass** zum Ermitteln des dritten Winkels (δ) das Kraftfahrzeug (7) in Richtung seiner Längsachse (15) mit einer bekannten Beschleunigung angetrieben wird.

3. Verfahren nach einem der vorhergehenden Ansprüche, **dadurch gekennzeichnet, dass** zum Ermitteln des dritten Winkels (δ) die bekannte Beschleunigung mit der von dem dritten Beschleunigungssensor (16) erfassten Beschleunigung verglichen wird.

4. Verfahren nach einem der vorhergehenden Ansprüche, **dadurch gekennzeichnet, dass** die bekannte Beschleunigung vorgegeben und/oder mittels eines am Kraftfahrzeug (7) angeordneten Beschleunigungssensors ermittelt wird.

5. Verfahren nach einem der vorhergehenden Ansprüche, **dadurch gekennzeichnet, dass** zum Ermitteln des dritten Winkels (δ) eine Beschleunigungsrichtung des Kraftfahrzeugs (7) ermittelt wird.

6. Verfahren nach einem der vorhergehenden Ansprüche, **dadurch gekennzeichnet, dass** die Beschleunigungsrichtung des Kraftfahrzeugs (7) aus einem Lenkwinkel und/oder einer Querbeschleunigung des Kraftfahrzeugs (7) ermittelt wird.

7. Verfahren nach einem der vorhergehenden Ansprüche, **dadurch gekennzeichnet, dass** zum Ermitteln des dritten Winkels (δ) Messwerte des dritten Beschleunigungssensors (16) über einen vorgebbaren Zeitraum (26) und/oder über eine vorgebbare Strecke (27) hinweg erfasst werden.

8. Verfahren nach einem der vorhergehenden Ansprüche, **dadurch gekennzeichnet, dass** von den erfassten Messwerten ein Mittelwert, insbesondere ein statistischer Mittelwert, bestimmt wird.

9. Verfahren nach einem der vorhergehenden Ansprüche, **dadurch gekennzeichnet, dass** der Mittelwert mit der bekannten Beschleunigung des Kraftfahrzeugs (7) verglichen wird.

10. Verfahren nach einem der vorhergehenden Ansprüche, **dadurch gekennzeichnet, dass** als zumindest einer der Beschleunigungssensoren ein kapazitiver Beschleunigungssensor verwendet wird.

11. Verfahren nach einem der vorhergehenden Ansprüche, **dadurch gekennzeichnet, dass** als Entfernungserfassungseinrichtung (5) ein Radar-Sensor verwendet wird.

12. Verfahren zum Ausrichten einer in oder an einem Kraftfahrzeug (7) angeordneten Entfernungserfassungseinrichtung (5), **gekennzeichnet durch** die Bestimmung der Ausrichtung der Entfernungserfassungseinrichtung (5) nach einem oder mehreren der vorhergehenden Ansprüche.

13. Verfahren nach Anspruch 12, **dadurch gekennzeichnet, dass** die Entfernungserfassungseinrichtung (5) mittels mindestens eines Stellglieds in Abhängigkeit der drei ermittelten Winkel ausgerichtet wird.

14. Vorrichtung zur Bestimmung der Ausrichtung einer in oder an einem Kraftfahrzeug (7), angeordneten Entfernungserfassungseinrichtung (5), insbesondere zur Durchführung des Verfahrens nach einem oder mehreren der vorhergehenden Ansprüche, mit einem ersten, von der Schwerkraft beaufschlagten und an der Entfernungserfassungseinrichtung (5) angeordneten Beschleunigungssensor (8) zur Ermittlung eines ersten Winkels (α) zwischen der Längsachse (4) der Entfernungserfassungseinrichtung (5) und einer senkrecht zur der Wirkungsrichtung der Schwerkraft liegenden Ebene (6), in der sich das Kraftfahrzeug (7) bewegt, und mit einem zweiten, von der Schwerkraft beaufschlagten und an der Entfernungserfassungseinrichtung (5) angeordneten Beschleunigungssensor (13) zur Ermittlung eines zweiten Winkels (β) zwischen der Querachse (11) der Entfernungserfassungseinrichtung (5) und der Ebene (6) sowie mit einem dritten, von einer durch die Bewegung des Kraftfahrzeugs (7) erzeugten Trägheitskraft beaufschlagten und an der Entfernungserfassungseinrichtung (5) angeordneten Beschleunigungssensor (16) zur Ermittlung eines in der Ebene (6) liegenden dritten Winkels (δ) zwischen der Längsachse (4) der Entfernungserfassungseinrichtung (5) und einer Längsachse (15) Kraftfahrzeugs (7), wobei die Wirkungsrichtung des ersten Beschleunigungssensors (8) parallel zur Längsachse (4) der Entfernungserfassungseinrichtung (5) und die Wirkungsrichtung des zweiten Beschleunigungssensors (13) parallel zur Querachse (11) der Entfernungserfassungseinrichtung (5) und die Wirkungsrichtung des dritten Beschleunigungssensors (16) senkrecht zur Längsachse (4) der Entfernungserfassungseinrichtung (5) angeordnet ist, sodass wenn die Entfernungserfassungseinrichtung (5) zwischen ihrer Längsachse und der Längsachse des Kraftfahrzeugs (7) einen Winkel größer Null einschließt, auf den Beschleunigungssensor eine Trägheitskraft wirkt.

## Claims

1. Method for determining the orientation of a distance recording device (5) arranged in or on a motor vehicle (7), having the following steps of:
- moving the motor vehicle (7) substantially in a plane (6) perpendicular to the direction of action of the force of gravity,
- determining a first angle (α) between the longitudinal axis (4) of the distance recording device (5) and the plane (6) by means of a first acceleration sensor (8) which is arranged on the distance recording device (5) and to which the force of gravity is applied, the direction of action of the first acceleration sensor (8) being arranged parallel to the longitudinal axis (4) of the distance recording device (5),
- determining a second angle (β) between the transverse axis (11) of the distance recording device (5) and the plane (6) by means of a second acceleration sensor (13) which is arranged on the distance recording device (5) and to which the force of gravity is applied, the direction of action of the second acceleration sensor (13) being arranged parallel to the transverse axis (11) of the distance recording device (5),
- determining a third angle (δ) between the longitudinal axis (4) of the distance recording device (5) and a longitudinal axis (15) of the motor vehicle (7) in the plane (6) by means of a third acceleration sensor (16) which is arranged on the distance recording device (5) and to which an inertial force generated by the movement of the motor vehicle (7) is applied, the direction of action of the third acceleration sensor (16) being arranged perpendicular to the longitudinal axis (4) of the distance recording device (5), with the result that an inertial force acts on the acceleration sensor if the distance recording device (5) encloses an angle of greater than zero between its longitudinal axis and the longitudinal axis of the motor vehicle (7).

2. Method according to Claim 1, **characterized in that**, in order to determine the third angle (δ), the motor vehicle (7) is driven with a known acceleration in the direction of its longitudinal axis (15).

3. Method according to one of the preceding claims, **characterized in that**, in order to determine the third angle (δ), the known acceleration is compared with the acceleration recorded by the third acceleration sensor (16).

4. Method according to one of the preceding claims, **characterized in that** the known acceleration is predefined and/or is determined by means of an acceleration sensor arranged on the motor vehicle (7).

5. Method according to one of the preceding claims, **characterized in that**, in order to determine the third angle (δ), an acceleration direction of the motor vehicle (7) is determined.

6. Method according to one of the preceding claims, **characterized in that** the acceleration direction of the motor vehicle (7) is determined from a steering angle and/or a lateral acceleration of the motor vehicle (7).

7. Method according to one of the preceding claims, **characterized in that**, in order to determine the third angle (δ), measured values of the third acceleration sensor (16) are recorded over a predefinable period (26) and/or over a predefinable distance (27).

8. Method according to one of the preceding claims, **characterized in that** a mean value, in particular a statistical mean value, is determined from the recorded measured values.

9. Method according to one of the preceding claims, **characterized in that** the mean value is compared with the known acceleration of the motor vehicle (7).

10. Method according to one of the preceding claims, **characterized in that** a capacitive acceleration sensor is used as at least one of the acceleration sensors.

11. Method according to one of the preceding claims, **characterized in that** a radar sensor is used as the distance recording device (5).

12. Method for orienting a distance recording device (5) arranged in or on a motor vehicle (7), **characterized by** the determination of the orientation of the distance recording device (5) according to one or more of the preceding claims.

13. Method according to Claim 12, **characterized in that** the distance recording device (5) is oriented by means of at least one actuator on the basis of the three determined angles.

14. Apparatus for determining the orientation of a distance recording device (5) arranged in or on a motor vehicle (7), in particular for carrying out the method according to one or more of the preceding claims, having a first acceleration sensor (8) which is arranged on the distance recording device (5), to which the force of gravity is applied and which is intended to determine a first angle (α) between the longitudinal axis (4) of the distance recording device (5) and a plane (6) which is perpendicular to the direction of action of the force of gravity and in which the motor vehicle (7) moves, and having a second acceleration sensor (13) which is arranged on the distance recording device (5), to which the force of gravity is applied and which is intended to determine a second angle (β) between the transverse axis (11) of the distance recording device (5) and the plane (6), and having a third acceleration sensor (16) which is arranged on the distance recording device (5), to which an inertial force generated by the movement of the motor vehicle (7) is applied and which is intended to determine a third angle (δ) between the longitudinal axis (4) of the distance recording device (5) and a longitudinal axis (15) of the motor vehicle (7) in the plane (6), the direction of action of the first acceleration sensor (8) being arranged parallel to the longitudinal axis (4) of the distance recording device (5) and the direction of action of the second acceleration sensor (13) being arranged parallel to the transverse axis (11) of the distance recording device (5) and the direction of action of the third acceleration sensor (16) being arranged perpendicular to the longitudinal axis (4) of the distance recording device (5), with the result that an inertial force acts on the acceleration sensor if the distance recording device (5) encloses an angle of greater than zero between its longitudinal axis and the longitudinal axis of the motor vehicle (7).

## Revendications

1. Procédé de détermination de l'orientation d'un appareil de détection de distance (5) disposé dans ou sur un véhicule automobile (7), comprenant les étapes suivantes :
- déplacement du véhicule automobile (7) sensiblement dans un plan (6) perpendiculaire au sens d'action de la pesanteur,
- détermination d'un premier angle (α) entre l'axe longitudinal (4) de l'appareil de détection de distance (5) et le plan (6) au moyen d'un premier capteur d'accélération (8) soumis à la pesanteur et disposé sur l'appareil de détection de distance (5), le sens d'action du premier capteur d'accélération (8) étant disposé parallèlement à l'axe longitudinal (4) de l'appareil de détection de distance (5),
- détermination d'un deuxième angle (ß) entre l'axe transversal (11) de l'appareil de détection de distance (5) et le plan (6) au moyen d'un deuxième capteur d'accélération (13) soumis à la pesanteur et disposé sur l'appareil de détection de distance (5), le sens d'action du deuxième capteur d'accélération (13) étant disposé parallèlement à l'axe transversal (11) de l'appareil de détection de distance (5),
- détermination d'un troisième angle (δ) se trouvant dans le plan (6) entre l'axe longitudinal (4) de l'appareil de détection de distance (5) et un axe longitudinal (15) du véhicule automobile (7) au moyen d'un troisième capteur d'accélération (16) soumis à la force d'inertie produite par le déplacement du véhicule automobile (7) et disposé sur l'appareil de détection de distance (5), le sens d'action du troisième capteur d'accélération (16) étant disposé perpendiculairement à l'axe longitudinal (4) de l'appareil de détection de distance (5), de sorte que lorsque l'appareil de détection de distance (5) forme un angle supérieur à zéro entre son axe longitudinal et l'axe longitudinal du véhicule automobile (7), une force d'inertie agit sur le capteur d'accélération.

2. Procédé selon la revendication 1, **caractérisé en ce que** pour déterminer le troisième angle (δ), le véhicule automobile (7) est propulsé dans la direction de son axe longitudinal (15) avec une accélération connue.

3. Procédé selon l'une des revendications précédentes, **caractérisé en ce que** pour déterminer le troisième angle (δ), l'accélération connue est comparée avec l'accélération détectée par le troisième capteur d'accélération (16).

4. Procédé selon l'une des revendications précédentes, **caractérisé en ce que** l'accélération connue est prédéfinie et/ou déterminée au moyen d'un capteur d'accélération disposé sur le véhicule automobile (7).

5. Procédé selon l'une des revendications précédentes, **caractérisé en ce qu'**un sens d'accélération du véhicule automobile (7) est déterminé pour déterminer le troisième angle (δ).

6. Procédé selon l'une des revendications précédentes, **caractérisé en ce que** le sens d'accélération du véhicule automobile (7) est déterminé à partir d'un angle de braquage et/ou d'une accélération transversale du véhicule automobile (7).

7. Procédé selon l'une des revendications précédentes, **caractérisé en ce que** pour déterminer le troisième angle (δ), les valeurs mesurées du troisième capteur d'accélération (16) sont collectées sur une période (26) qui peut être prédéfinie et/ou sur un trajet (27) qui peut être prédéfini.

8. Procédé selon l'une des revendications précédentes, **caractérisé en ce qu'**une valeur moyenne, notamment une valeur moyenne statistique est déterminée à partir des valeurs mesurées collectées.

9. Procédé selon l'une des revendications précédentes, **caractérisé en ce que** la valeur moyenne est comparée avec l'accélération connue du véhicule automobile (7).

10. Procédé selon l'une des revendications précédentes, **caractérisé en ce qu'**un capteur d'accélération capacitif est utilisé en tant qu'au moins l'un des capteurs d'accélération.

11. Procédé selon l'une des revendications précédentes, **caractérisé en ce qu'**un capteur radar est utilisé comme appareil de détection de distance (5).

12. Procédé d'orientation d'un appareil de détection de distance (5) disposé sur un véhicule automobile (7), **caractérisé par** la détermination de l'orientation de l'appareil de détection de distance (5) selon l'une ou plusieurs des revendications précédentes.

13. Procédé selon la revendication 12, **caractérisé en ce que** l'appareil de détection de distance (5) est orienté au moyen d'au moins un actionneur en fonction des trois angles déterminés.

14. Dispositif de détermination de l'orientation d'un appareil de détection de distance (5) disposé dans ou sur un véhicule automobile (7), notamment destiné à mettre en oeuvre le procédé selon l'une ou plusieurs des revendications précédentes, comprenant un premier capteur d'accélération (8) soumis à la pesanteur et disposé sur l'appareil de détection de distance (5) servant à déterminer un premier angle (α) entre l'axe longitudinal (4) de l'appareil de détection de distance (5) et un plan (6) qui est perpendiculaire au sens d'action de la pesanteur, dans lequel se déplace le véhicule automobile (7), et comprenant un deuxième capteur d'accélération (13) soumis à la pesanteur et disposé sur l'appareil de détection de distance (5) servant à déterminer un deuxième angle (ß) entre l'axe transversal (11) de l'appareil de détection de distance (5) et le plan (6), ainsi qu'un troisième capteur d'accélération (16) soumis à la force d'inertie produite par le déplacement du véhicule automobile (7) et disposé sur l'appareil de détection de distance (5), servant à déterminer un troisième angle (δ) se trouvant dans le plan (6) entre l'axe longitudinal (4) de l'appareil de détection de distance (5) et un axe longitudinal (15) du véhicule automobile (7), le sens d'action du premier capteur d'accélération (8) étant disposé parallèlement à l'axe longitudinal (4) de l'appareil de détection de distance (5) et le sens d'action du deuxième capteur d'accélération (13) parallèlement à l'axe transversal (11) de l'appareil de détection de distance (5) et le sens d'action du troisième capteur d'accélération (16) perpendiculairement à l'axe longitudinal (4) de l'appareil de détection de distance (5), de sorte que lorsque l'appareil de détection de distance (5) forme un angle supérieur à zéro entre son axe longitudinal et l'axe longitudinal du véhicule automobile (7), une force d'inertie agit sur le capteur d'accélération.
